# EUROPEAN PATENT SPECIFICATION

(11) **EP 3 799 686 B1**
(45) Date of publication and mention of the grant of the patent: **19.06.2024**
(21) Application number: 18745532.4
(22) Date of filing: 17.07.2018
(51) Int. Cl.: H04M 1/02, G06F 1/16, G02B 15/00, G02B 13/00

(54) **A PROTRUDING AND FOLDING CAMERA SYSTEM FOR A PORTABLE ELECTRICAL DEVICE**
VORSTEHENDES UND FALTBARES KAMERASYSTEM FÜR EINE TRAGBARE ELEKTRISCHE VORRICHTUNG
SYSTÈME DE CAMÉRA FAISANT SAILLIE ET PLIABLE POUR UN DISPOSITIF ÉLECTRIQUE PORTABLE

(43) Date of publication of application: 07.04.2021
(73) Proprietor: HUAWEI TECHNOLOGIES CO., LTD., Shenzhen, Guangdong 518129 (CN)
(72) Inventor: EROMAKI, Marko, 16440 Kista (SE)
(74) Representative: Körber, Martin Hans
(86) International application number: PCT/EP2018/069364
(87) International publication number: WO 2020/015818

(56) References cited:
- US-A1- 2003 174 240
- US-A1- 2005 245 295
- US-A1- 2008 106 811
- US-A1- 2017 353 638

## Description

### TECHNICAL FIELD

The present application relates to the field of camera technology.

### BACKGROUND

Full-screen devices are desired with a thin design. However, thinness of the devices causes limitations for camera solutions suitable for the devices, especially for a front camera on the full-screen devices. As the thinness is the key driving factor for the devices, a camera form factor is defined accordingly. Typically, this results in a thin camera. This may in turn cause issues from an image quality point of view. For example, a thin camera may require a small image sensor with low number of pixels and resolution, low number of lenses resulting in poor optical quality and lack of focusing and stabilizing systems.

US 2008/106811 A1 discloses a device having at least two movable lens units, wherein each of the at least two movable lens units has at least one lens, wherein the at least two movable lens units are movable into a first state, wherein the at least two movable lens units are arranged in parallel to each other, and wherein the at least two movable lens units are movable into a second state, wherein the at least two movable lens units are arranged on top of each other for positioning the lenses of the at least two movable lens units in an optical axis.

US 2017/353638 A1 discloses a device comprising at least two body sections. The first body section comprises an imaging unit and a magnet movably connected to the imaging unit. The second body section comprises an optical unit with a magnet fixed to the optical unit. The magnet movably connected to the imaging unit may be sliding along a guiding element. The body sections are also in a movable connection with each other, and the device is operable in at least two modes. In the first mode the imaging unit and the optical unit are fixed in a set relative position due to magnetic interaction between the magnets, while the imaging unit is positioned away from the optical unit. In the second mode the units are positioned apart from each other.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The invention is defined in the independent claims. Advantageous features are defined in the dependent claims.

It is an objective to provide a solution for a camera system for a portable electrical device.

This objective is achieved by the features of the independent claims. Further embodiments and examples are apparent from the dependent claims, the description and the figures.

According to a first aspect, a camera system for a portable electrical device is provided. The camera system comprises a first image sensor; a first optomechanical unit; and a first carriage for movably coupling the camera system to the portable electrical device; wherein the first image sensor is mounted in the first carriage and the first optomechanical unit is pivotably coupled to the first carriage to allow adjustment of the camera system to a storage position with the first image sensor and the first optomechanical unit being side-by-side in a planar position, and an operating position with the first optomechanical unit being folded on top of the first image sensor to form a first operable camera module. This enables storing the camera system in a thin shape when no camera functionality is needed, and folding the camera elements to form an operable camera module when the camera is needed. Hence a product thickness may be decreased, as the camera elements may be off-stacked when not needed, thus providing a bump-free product outline. Further, the solution provides improved mechanical packaging efficiency and easier control of optical axis matching due to low degree of dynamics.

To summarize, the protruding and folding camera system comprising multiple segments is suitable for a thin device with improved camera functionalities compared to a single piece camera system.

In an implementation form of the first aspect, the camera system comprises automatically operating mechanical means for folding the first optomechanical unit on top of the first image sensor into the operating position in response to the camera system moving outward from the portable electrical device. Thus, when the camera system moves outward from the portable electrical device, the folding operation is performed automatically to provide the operable camera module. This makes the mechanism convenient to use.

In a further implementation form of the first aspect, the automatically operating mechanical means comprise a hinge and a spring element. This enables enhancing the folding operation enabled with the hinge with the spring element.

In a further implementation form of the first aspect, the first carriage comprises a positioning guiding recess configured for guiding the first optomechanical unit to a correct position with matching optical axis configuration between the first optomechanical unit and the first image sensor when folding to the operating position. This enables that the optomechanical unit and the image sensor may be correctly positioned when being stacked to improve accuracy requirements of the operable camera module. In addition, the guiding recess may enable thinness of the operable camera module.

In a further implementation form of the first aspect, the first carriage comprises a dual hinge-system to allow the first operable camera module being folded into different directions with respect to the portable electrical device. This enables that the operable camera module may be further rotated and aligned, for example, against a back side of the portable electrical device. Thus, generating a bump in the device outline may be avoided, and reliability may be improved in terms of external impacts.

In a further implementation form of the first aspect, the first optomechanical unit comprises a top side and a bottom side, the bottom side facing the first image sensor hardware unit when folded and comprising a sliding surface surrounding a recessed optical surface for providing sliding contact area when being folded. This may prevent scratching the optical surface during folding sequence.

In a further implementation form of the first aspect, at least one of the first image sensor or the first optomechanical unit comprises at least one of an electromechanical positioning arrangement or a fine adjustment arrangement to improve positioning errors between the first optomechanical unit and the first image sensor in the operating position. Thus, accuracy requirements in terms of tilt, horizontal offset and vertical distance may be improved.

In a further implementation form of the first aspect, the camera system further comprises at least one second optomechanical unit; wherein the at least one second optomechanical unit and the first optomechanical unit are pivotably coupled to each other, and the at least one second optomechanical unit is being folded on top of the first optomechanical unit to form the operable camera module, each of the first and the at least one second optomechanical unit having an opposite folding direction in relation to the adjacent first or the second optomechanical unit. This enables that a multi-layer camera unit may be automatically structured in response to the carriage movement. By stacking multiple optomechanical units on top of the image sensor, a tall camera structure may be provided with improved image quality. Further, stacking efficiency of the optical elements may be improved.

In a further implementation form of the first aspect, the camera system further comprises at least one second image sensor; and at least one second optomechanical unit; wherein the at least one second image sensor is mounted in the first carriage on the opposite side adjacent to the first image sensor and the at least one second optomechanical unit is pivotably coupled to the first carriage adjacent to the first optomechanical unit to allow adjustment of the camera system to a storage position with the at least one second image sensor and the at least one second optomechanical unit being side-by-side in a planar position, and an operating position with the at least one second optomechanical unit being folded on top of the at least one second image sensor to form at least one second operable camera module. Thus, the camera system may support dual-screen portable electrical devices with high mechanical packaging efficiency and mechanical expansion rate.

In a further implementation form of the first aspect, the camera system further comprises at least one second image sensor; at least one second optomechanical unit; and a second carriage arranged in parallel to the first carriage; wherein the at least one second image sensor is mounted in the second carriage and the at least one second optomechanical unit is pivotably coupled to the second carriage to allow adjustment of the camera system to a storage position with the at least one second image sensor and the at least one second optomechanical unit being side-by-side in a planar position, and an operating position with the at least one second optomechanical unit being folded on top of the at least one second image sensor to form at least one second operable camera module, the at least one second operable camera module facing different direction than the first operable camera module. Hence, the operable camera modules may be operated separately, for example, when only rear or front view camera is needed.

In a further implementation form of the first aspect, the camera system comprises a dual hinge-system to allow the first and the at least one second operable camera modules being folded into different directions with respect to the portable electrical device such that optical axes of the first and the at least one second operable camera module face different directions. This enables that the operable camera modules may be further rotated and aligned, for example, in different directions with respect to the portable electrical device. Thus, generating a bump in the device outline may be avoided, and reliability may be improved in terms of external impacts.

In a further implementation form of the first aspect, the dual-hinge system comprises a spring element. This enables enhancing the folding movement.

According to a second aspect, there is provided a portable electronic device comprising the camera system of the first aspect. Hence a product thickness may be decreased, as the camera elements may be off-stacked when not needed, thus providing a bump-free product outline.

According to a third aspect, there is provided a method for a camera system for a portable electrical device. The method comprises moving a carriage outward from a portable electrical device; and folding a first optomechanical module, pivotally coupled to said carriage, on top of a first image sensor mounted in said carriage to form an operable camera module of said first optomechanical module and said first image sensor. This enables that the camera system may be stored in a thin shape when no camera functionality is needed, and folding the camera elements to form an operable camera module when the camera is needed. In addition, improved mechanical packaging efficiency and easier control of optical axis matching due to low degree of dynamics is provided.

### BRIEF DESCRIPTION OF THE DRAWINGS

In the following examples are described in more detail with reference to the attached figures and drawings, in which:
FIG. 1 illustrates an exploded view of elements of a camera system for a portable electrical device.
FIG. 2 illustrates a schematic representation of arrangement of camera elements in a storage position.
FIG. 3 illustrates a schematic representation of arrangement of camera elements in an operating position.
FIG. 4 illustrates a schematic representation of a folding operation of a camera system from a storage position to an operating position.
FIG. 5 illustrates a schematic representation of a cross-section of a camera device for a portable electrical device.
FIG. 6 illustrates a schematic representation of a protection arrangement for optical areas of a camera system in a storage position.
FIG. 7 illustrates a schematic representation of a protection arrangement for optical areas of a camera system in an operating position.
FIG. 8 illustrates a schematic representation of an axial rotation arrangement for pivotably coupling an optomechanical unit and a carriage of a camera system.
FIG. 9 illustrates a schematic representation of an axial rotation arrangement comprising a spring element.
FIG. 10 illustrates a schematic representation of a camera system comprising an electromechanical positioning arrangement for accuracy requirements.
FIG. 11 illustrates a schematic representation of a camera system comprising a fine adjustment arrangement for accuracy requirements.
FIG. 12 illustrates a schematic representation of an optomechanical unit of a camera system comprising a sliding surface for folding.
FIG. 13 illustrates a schematic representation of an optomechanical unit's sliding contact during folding.
FIG. 14 illustrates a schematic representation of a cross-section of a camera system in a storage position.
FIG. 15 illustrates a schematic representation of a cross-section of a camera system in an operational position.
FIG. 16 illustrates a schematic representation of a camera system in a storage position for relative thickness comparison.
FIG. 17 illustrates a schematic representation of a camera system in an operational position for relative thickness comparison.
FIG. 18 illustrates a schematic representation of a camera system for a portable electrical device comprising a dual-hinge system.
FIG. 19 illustrates another schematic representation of a camera system for a portable electrical device comprising a dual-hinge system.
FIG. 20 illustrates a schematic representation of a front view of a camera system for a portable electrical device comprising a dual-hinge system in a folded operating position.
FIG. 21 illustrates a schematic representation of a rear view of a camera system for a portable electrical device comprising a dual-hinge system in a folded operating position.
FIG. 22 illustrates a schematic representation of a front view of a camera system for a portable electrical device comprising more than one operable camera module.
FIG. 23 illustrates a schematic representation of a rear view of a camera system for a portable electrical device comprising more than one operable camera module.
FIG. 24 illustrates a schematic representation of a camera system for a portable electrical device comprising more than one carriage.
FIG. 25 illustrates another schematic representation of a camera system for a portable electrical device comprising more than one carriage.
FIG. 26 illustrates a schematic representation of a cross-section view of a camera system for a portable electrical device comprising more than one carriage in an operating position.
FIG. 27 illustrates a schematic representation of a transition from a storage position to an operating position of a camera system for a portable electrical device comprising more than one operable camera module.
FIG. 28 illustrates a schematic representation of a transition from a storage position to an operating position of a camera system comprising more than one optomechanical units.
FIG. 29 illustrates a schematic representation of a side view of an exemplary stacking arrangement of camera elements in a traditional camera system.
FIG. 30 illustrates a schematic representation of a side view of a stacking arrangement of camera elements in a protruding and foldable camera system.

### DETAILED DESCRIPTION

In the following description, reference is made to the accompanying drawings, which form part of the disclosure, and in which are shown, by way of illustration, specific aspects and examples in which the present subject-matter may be placed. It is understood that other aspects may be utilized and structural or logical changes may be made without departing from the present subject-matter. The following detailed description, therefore, is not to be taken in a limiting sense, as the present subject-matter is defined in the appended claims.

For instance, it is understood that a disclosure in connection with described methods may also hold true for a corresponding devices or systems configured to perform the method and vice versa. For example, if a specific method step is described, a corresponding device may include a unit or other means to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various exemplary aspects described herein may be combined with each other, unless specifically noted otherwise.

The purpose of the solution is to provide a protruding and foldable camera system, which may be movably coupled to a portable electrical device. Camera system units may be protruded outward of the portable electrical device, the movement resulting in automatically activating folding mechanism which combines the camera system units together into a single, stacked, functional package. Before folding the units to form the operable camera arrangement, the camera system units may be positioned in parallel, in a side-by-side arrangement, thus enabling storing the camera system in a thin flattened state. This means that the camera system may be arranged into two different positions, a storage position and an operating position, in which two positions the camera system has different structures and different form factors. Thus, the camera system is suitable to be coupled in thin portable electrical devices, while enabling forming thick camera with good image qualities compared to the thin shape before activating the folding operation.

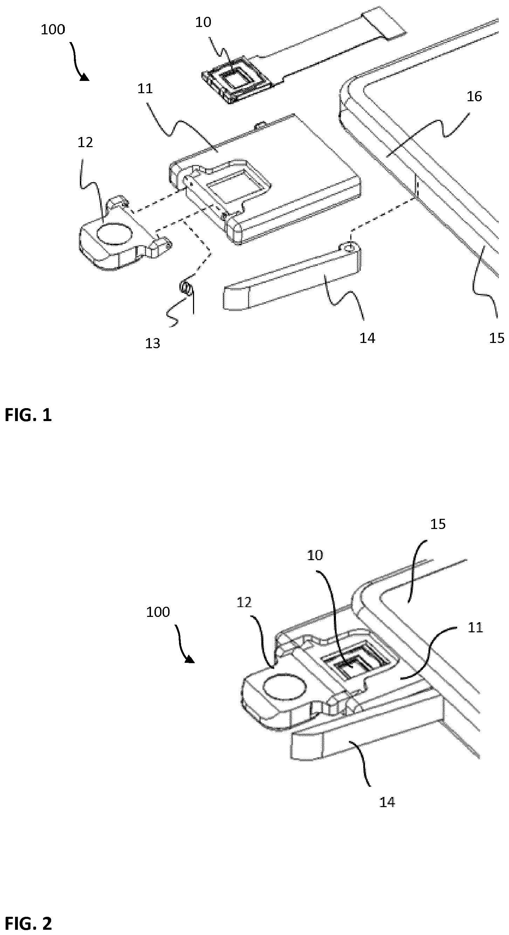

FIG. 1 illustrates an exploded view of elements 10, 11, 12 of a camera system 100 for a portable electrical device 15. The camera system 100 may comprise multiple segments which may be arranged into different structures depending on whether there is a need for a usage of a camera at the time.

The camera system 100 comprises a first image sensor 10, a first optomechanical unit 12 and a first carriage 11 for movably coupling the camera system to the portable electrical device. The first image sensor 10 is mounted in the first carriage 11 and the first optomechanical unit 12 is pivotably coupled to the first carriage 11 to allow adjustment of the camera system to a storage position with the first image sensor 10 and the first optomechanical unit 12 being side-by-side in a planar position, and an operating position with the first optomechanical unit 12 being folded on top of the first image sensor 10 to form a first operable camera module. The first optomechanical unit 12 is coupled to the carriage 11 with a pivot system, for example, a hinge. The folding movement may be assisted by a spring element 13, for example, a coil spring, around the pivot system. The pivot system and the spring element 13 may form an automatically operating mechanical means for folding the first optomechanical unit 12 on top of the first image sensor 10 into the operating position. The folding operation may be initiated when the first carriage 11 is moved outwardly from the portable electrical device 15 for a certain distance. The overall mechanical sequence arranges the camera system elements 10, 11, 12 in a stacked state and generates the complete camera module with full electro-opto-mechanics functionality. The mechanical sequence may be reversed when the first carriage 11 is moved inside the portable electrical device 15. This means that in response to moving the first carriage 11 inward the portable electrical device 15, the camera system elements 10, 11, 12 may un-fold back to the flattened state inside the device 15 mechanically.

The camera system 100 may be coupled to a portable electrical device 15. The portable electrical device 15 may be, for example, a mobile phone, a smart phone, a pair of smart glasses or a tablet. The portable electrical device 15 may comprise a compartment 16 for the first carriage 11. The portable electrical device 15 may further comprise a protection lid 14 for protecting the camera system 100 from dust or liquids when in the storage position, and to provide protection and support for the camera system 100 when in the operating position. In an implementation form, the protection lid 14 may be coupled to the first carriage 11 instead of the portable electrical device 15.

FIG. 2 illustrates schematic representation of arrangement of camera elements 10, 11, 12 of a camera system 100 in a storage position. The camera system 100 in FIG. 2 may comprise the corresponding parts as illustrated in FIG. 1 assembled together.

In the storage position, the optomechanical unit 12 and the image sensor 10 mounted in the carriage 11 are side-by-side in a planar position. In the storage position, the camera system 100 does not have camera functionality as the elements 12, 10 are separated in parallel. When the camera system 100 is coupled to the portable electrical device 15, the camera system 100 may be inside the portable electrical device 15 in the storage position when not in use by a user.

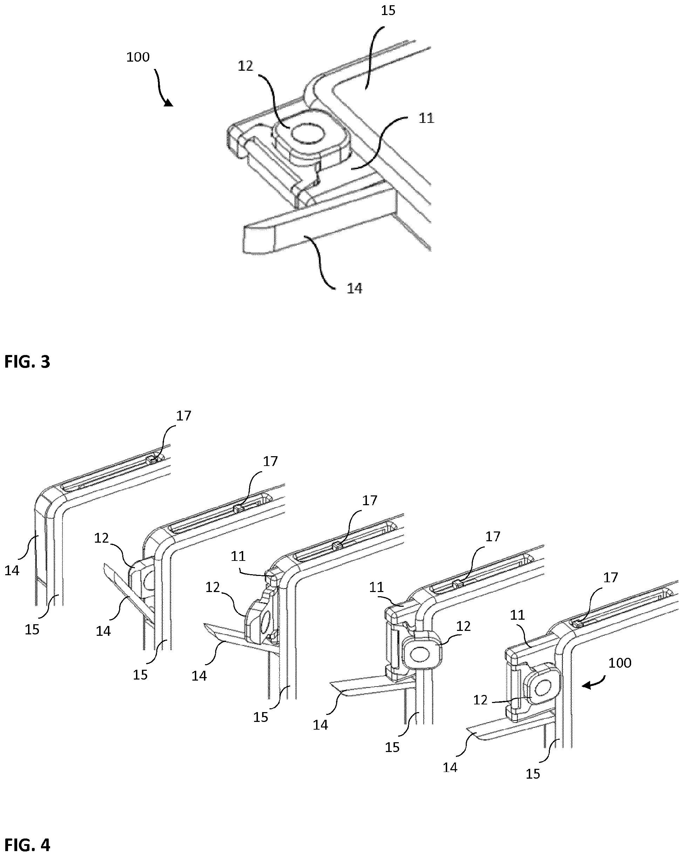

FIG. 3 illustrates schematic representation of arrangement of camera elements 10, 11, 12 of a camera system 100 in an operating position. The camera system 100 in FIG. 3 may comprise the corresponding parts as illustrated in FIG. 1 assembled together.

In the operating position, the optomechanical unit 12 is folded on top of the image sensor 10. When the elements 10, 12 are stacked on top of each other, the camera system 100 has full electro-opto-mechanical functionalities, thus providing a fully operable camera module.

FIG. 4 illustrates schematic representation of a transition of a camera system 100 for a portable electrical device 15 from a storage position to an operating position.

When the camera is not needed, it may be in the storage position inside the portable electrical device 15. Hence, the camera system 100 does not need any space on surface of the device 15 when camera functions are not required by a user. When an operable camera module is needed, the camera segments 11, 12 may be protruded outward the device 15 electronically or manually, for example, with a latch, an actuator or a user operable lever 17. When a carriage 11 moves outwards a compartment in the portable electrical device 18, an optomechanical unit 12 of the camera system 100 starts to fold on top of an image sensor mounted in the carriage 11. Once the folding operation is completed, i.e. the optomechanical unit 12 is positioned on top of the image sensor, the camera system 100 is arranged in the operating position. The folding action may occur automatically in response to the movement of the carriage 11. FIG. 4 illustrates the folding mechanism in steps when the carriage 11 is moved by the lever 17 outward the device 15. The device may comprise a protecting lid 14, which may be pushed aside by the camera system in response to the carriage movement. In the first step (left-most figure), the protecting lid 14 covers the compartment for the camera system 100 to protect the system 100 from external factors, and in the last step (right-most figure), the protecting lid 14 may provide additional support for the camera structure.

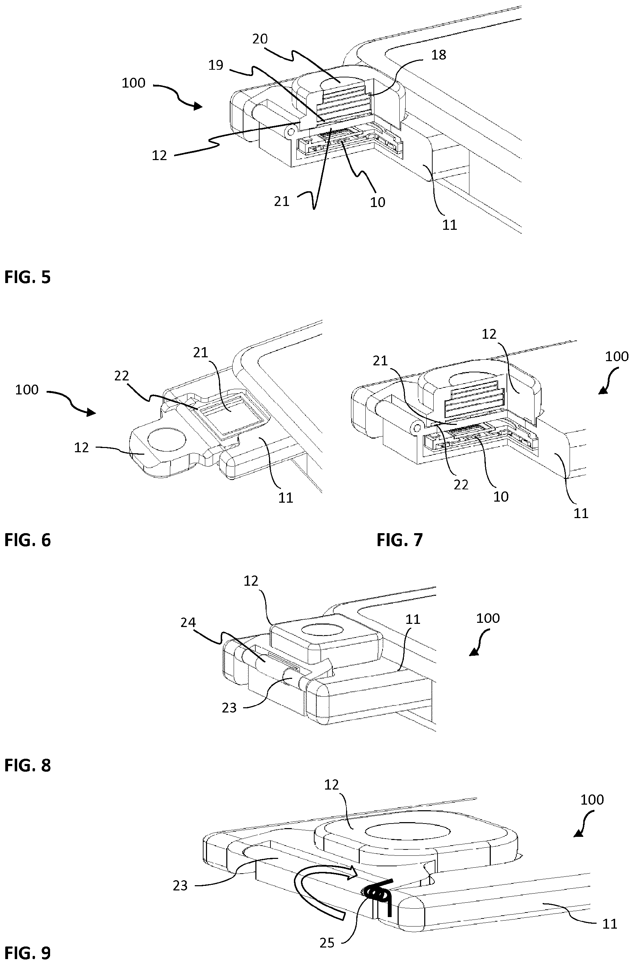

FIG. 5 illustrates a schematic representation of a cross-section of a camera system 100 for a portable electrical device.

An optomechanical unit 12 of the camera system 200 may comprise optical lenses 18 for refracting and directing light toward an image sensor 10 mounted in a movable carriage 11. The optomechanical unit 12 may comprise glass windows 19, 20 on top and bottom of the optical lens group 18 for protecting the lenses 18 from scratching and dust. In an implementation, the optomechanical unit 12 may comprise means for improving accuracy in terms of tilt, horizontal offset and vertical distance, for example, with autofocus and optical image stabilization actuators. The carriage 11 may comprise a glass window 21 above the image sensor 10 for providing a route for the refracted light to the image sensor 10 and for protecting the image sensor 10 from dust. The glass window 21 may comprise anti-scratch qualities. The protecting glass windows 19, 20 used in front of the optical elements 18, i.e. lenses, may be cleaned by a user from smudges when needed, and thus the camera view may be cleared without harming the lenses.

FIGS. 6 and 7 illustrate a schematic representation of a protection arrangement 22 for optical areas of a foldable camera system 100.

A carriage 11 of the camera system 100 may comprise a compression gasket 22 around a glass window 21 above an image sensor 10 mounted in the carriage 11. The compression gasket 22 may provide sealing against dust and moisture when an optomechanical unit 12 is folded on top of the image sensor 10, as illustrated in FIG. 7. After being folded, in a short, for example 200-500 ms time, the compression gasket 22 between the elements 12, 10 may be compressed between the elements 12, 10 to protect the optical areas.

FIG. 8 illustrates a schematic representation of an axial rotation arrangement for pivotably coupling an optomechanical unit 12 and a carriage 11 of a camera system 100. The axial rotation arrangement may comprise a hinge 23 for foldably coupling the optomechanical unit 12 to the carriage 11. Electrical connections 24 may be required to the optomechanical unit 12, for example, for auto-focus and image stabilization. The required electrical connections 24 may be routed inside the carriage 11 and around the hinge 23, for example, with a bending or rolling flexible printed circuit (FPC). In an implementation, an axial rotation arrangement for pivotably coupling an optomechanical unit 12 and a carriage 11 of a camera system 100 may comprise a spring element 25, as illustrated in FIG. 9. The spring element 25 may be, for example, a coil spring, or any other suitable spring element. The spring element 25 may be arranged around a hinge 23 to enhance the folding movement, and thus providing automatically operating mechanical means for folding the optomechanical unit 12 on top of an image sensor mounted in the carriage 11, as illustrated with a curved arrow in FIG. 9.

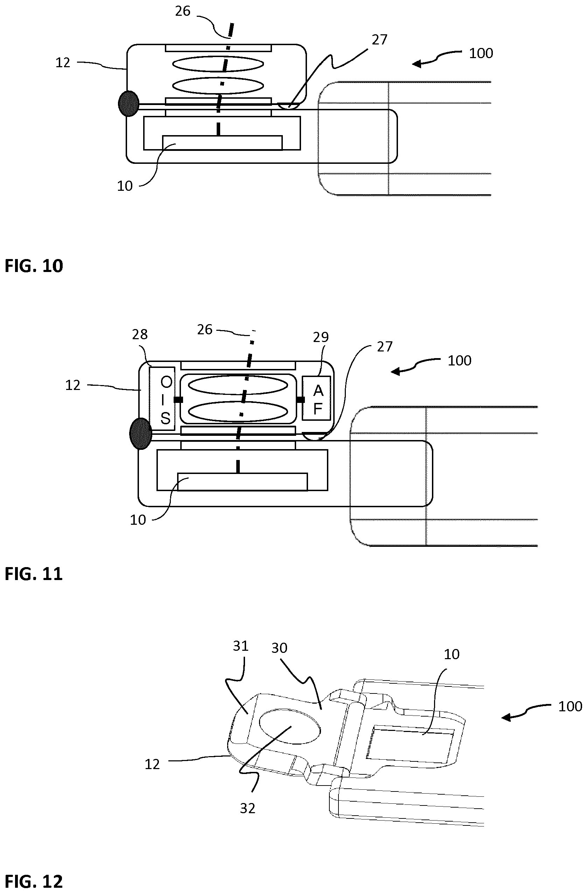

FIG. 10 illustrates a schematic representation of a camera system 100 comprising an electromechanical positioning arrangement 27 for accuracy requirements. The electromechanical positioning arrangement 27 may be used for optical axis alignment corrections to meet requirements concerning accuracy in term of tilt, horizontal offset and vertical distance.

The electromechanical positioning arrangement 27 in FIG. 10 may be sufficient to meet the accuracy requirements for less-sensitive lenses. For example, mid-range lenses with F-number > F2.0 may have longer depth-of-focus, thus allowing longer focusing margin and larger error. The electromechanical positioning of an optomechanical unit 12 in relation to an image sensor 10 may be applied, for example, with suitable datum plane contacts and short tolerance chains. The datum plane refers to a horizontal or vertical reference point on which surface elevations are based. The electromechanical positioning arrangement 27 may comprise a datum contact bump for z-positioning to correct the optical axis alignment between the image sensor 10 and the optomechanical unit 12.

FIG. 11 illustrates a schematic representation of a camera system 100 comprising a fine adjustment arrangement 28, 29 for accuracy requirements. The fine adjustment arrangement 28, 29 may be applied in addition to the electromechanical positioning arrangement 27 illustrated in FIG. 10 for improved accuracy.

High-quality lenses have shallow depth-of-focus and less errors are allowed compared to mid-range lenses. For high sensitivity, the lenses may have low F-numbers, for example, F1.6-F2.0. The high-quality lenses may be operated by electrical autofocus (AF) 29 and optical image stabilization (OIS) 28 actuators generating micron level movements of the lenses. The fine adjustment arrangement 28, 29 may comprise the AF 29 and OIS 28 systems for fine adjustment during camera startup stage. This means that as soon as an optomechanical unit 12 has being folded on top of an image sensor 10, the operable camera module may be calibrated using the fine adjustment arrangement 28, 29. The generated movements may involve tilt correction in addition to xyz-linear shiftings. The fine adjustment arrangement 28, 29 may be comprised in the first optomechanical unit 12 or in the first image sensor 10 to improve the positioning errors between the elements 10, 12. FIG. 12 illustrates a schematic representation of a first optomechanical unit 12 of a camera system 100 comprising a sliding surface 30, 31 for folding.

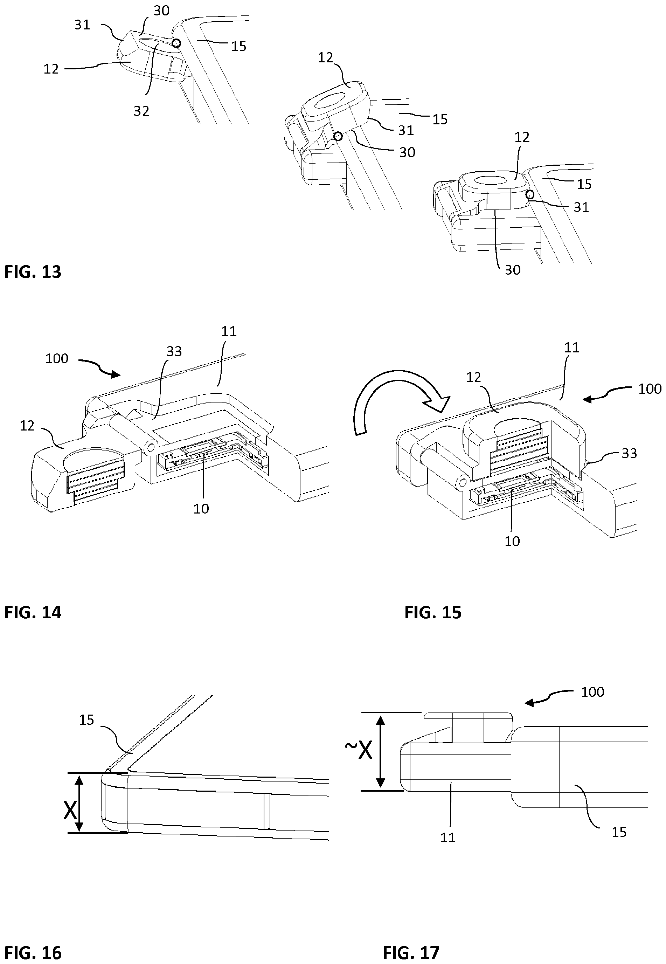

The first optomechanical unit 12 has a top and a bottom side, the bottom side facing a first image sensor 10 when folded on top of the first image sensor 10. The bottom side may comprise a sliding surface 30, 31 surrounding a recessed optical surface 32 for providing sliding contact area when being folded. The sliding surface 30, 31 may prevent scratching the optical surface 32 during folding. The recessed optical surface 32 may emboss the surrounding sliding surface 30, 31 to contact a device cover first, when the camera system 100 is coupled to a portable electrical device. The sliding surface 30, 31 may be, for example, plastic or comprise e.g. a PTFE tape or coating to provide a smooth, low friction movement. The bottom side comprising the sliding surface 31 may be sloped on one side to enhance smooth folding movement at the end state of the folding. Thus, scratching the optical surface 32 and the device cover 15 may be prevented when the folding optomechanical unit 12 slides between the parts, as illustrated in FIG. 13. In FIG. 13, the optomechanical unit's 12 sliding contact during the folding operation is illustrated with a circle.

FIGS. 14 and 15 illustrate a schematic representation of a cross-section of a camera system 100 in a storage position and in an operating position. The camera system 100 comprises a first carriage 11, a first optomechanical unit 12 and a first image sensor 10. The first carriage 11 may comprise a positioning guiding recess 33 configured for guiding the first optomechanical unit 12 to a correct position with matching optical axis configuration between the first optomechanical unit 12 and the first image sensor 10 when folded to the operating position, as illustrated with an arrow in FIG. 15. The guiding recess 33 may further enable reducing the difference in thickness of the camera system 100 in the storage position (FIG. 14) and the operating position (FIG. 15).

FIGS. 16 and 17 illustrate a schematic representation of a relative thickness comparison of a camera system 100 in a storage position and in an operating position. When the camera system 100 is in the storage position, the camera system 100 may fit inside a portable electrical device 15 having a thickness X. However, when the camera system 100 is arranged into the operating position, the thickness of the camera system 100 may have approximately the same thickness X. For example, the carriage 11 thickness may be some millimeters, like 4.2 mm, and the carriage 11 may be coupled to a portable electrical device 15 having a thickness of slightly more, like 7 mm, in order for the carriage to fit inside the portable electrical device in the storage position. The first optomechanical unit may have a thickness of some millimeters. It may be even in the same order of magnitude as the thickness of the carriage, or a little less. However, in the operating position a part of the first optomechanical unit may reside in a recess formed by the carriage, so that the total thickness of the operable camera module may be less than the sum of the thicknesses of the two parts. When protruded and folded to the operating position, the operable camera module may have, for example, a thickness of 6.8 mm. Hence, the camera system 100 may be stored in a thin state required by the device design, and yet enable providing an operable camera which structure is not limited by the form factor of the desired thinness compared to the storage state.

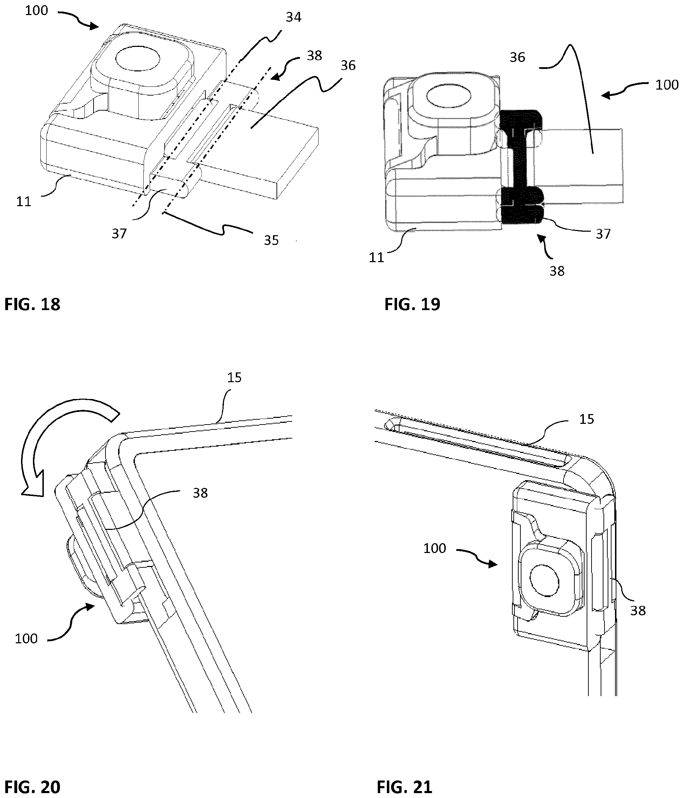

FIGS. 18 and 19 illustrate a schematic representation of a camera system 100 for a portable electrical device comprising a dual-hinge system 38.

The camera system 100 may comprise an additional hinge unit 37 coupled to a carriage 11 of the camera system 100. The hinge unit 37 may be, for example, a dual-hinge system 38 comprising a first pivot 34 and a second pivot 35, and connected between the carriage 11 and a sub-arm 36. Thus, an operable camera module may be folded into different directions with respect to the portable electrical device 15, as illustrated in FIGS. 20 and 21. In FIGS. 20 and 21, the operable camera module is folded on a back side of the portable electrical device 15. As the dual-hinge system 38 for the folding movement allows to rotate and align the carriage against, for example, the back side of the device 15, a more flexibly applicable camera solution may be achieved without necessarily generating an additional bump on the device outline. Further, by allowing the camera system 100 to be folded on different directions in relation to the device 15, higher reliability may be achieved in terms of external impacts.

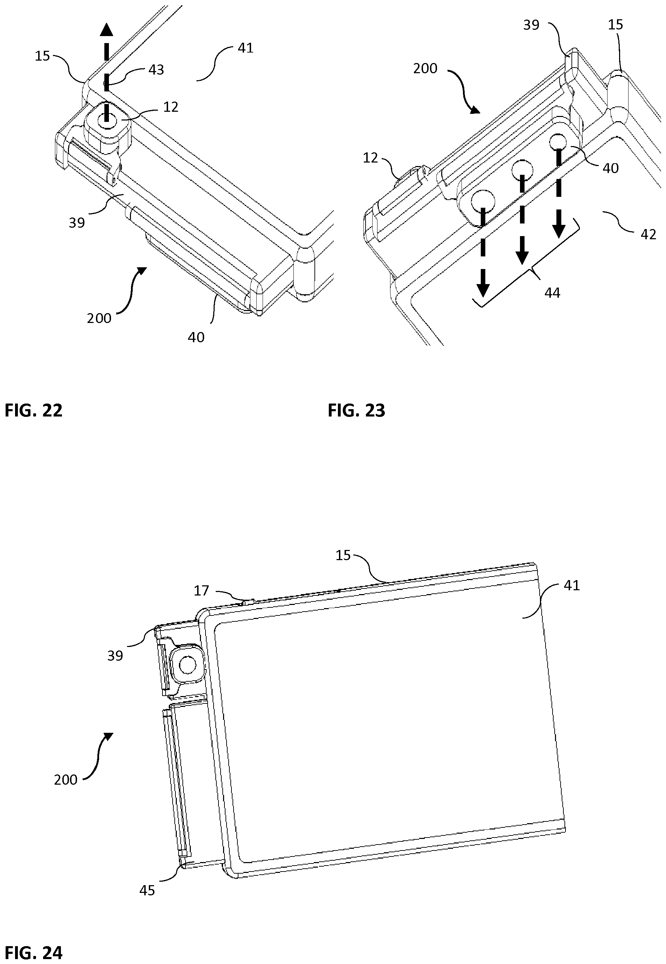

FIGS. 22 and 23 illustrate a schematic representation of a camera system 200 for a portable electrical device 15 comprising more than one camera module. FIG. 22 illustrates a front view and FIG. 23 a rear view of the camera system 200 coupled to the device 15.

The camera system 200 comprises a first carriage 39 for movably coupling the camera system 200 to the portable electrical device 15, a first image sensor (not shown in FIGS. 22, 23), at least one second image sensor (not shown in FIGS. 22, 23), a first optomechanical unit 12 and at least one second optomechanical unit 40. The first and the at least one second image sensor may be mounted in the first carriage 39 on the opposite sides adjacent to each other. The first and the at least one second optomechanical unit 12, 40 may be pivotably coupled to the first carriage 39. The at least one second optomechanical unit 40 may be positioned adjacent to the first optomechanical unit 12. The camera system 200 may be adjusted to a storage position with the first and the at least one second image sensor and the first and the at least one second optomechanical unit 12, 40 being side-by-side in a planar position. Further, the camera system 200 may be adjusted to an operating position with the first optomechanical unit 12 being folded on top of the first image sensor to form a first operable camera module and the at least one second optomechanical unit 40 being folded on top of the at least one second image sensor 40 to form at least one second operable camera module. Thus, a multi-camera assembly may be provided to enable camera functionalities for both rear and front side directions such that the optical axes 43, 44 of the camera modules face opposite directions. Hence, the camera system 200 may be coupled to a dual-screen device without requiring space from a front 41 or a rear screen 42 of the device 15.

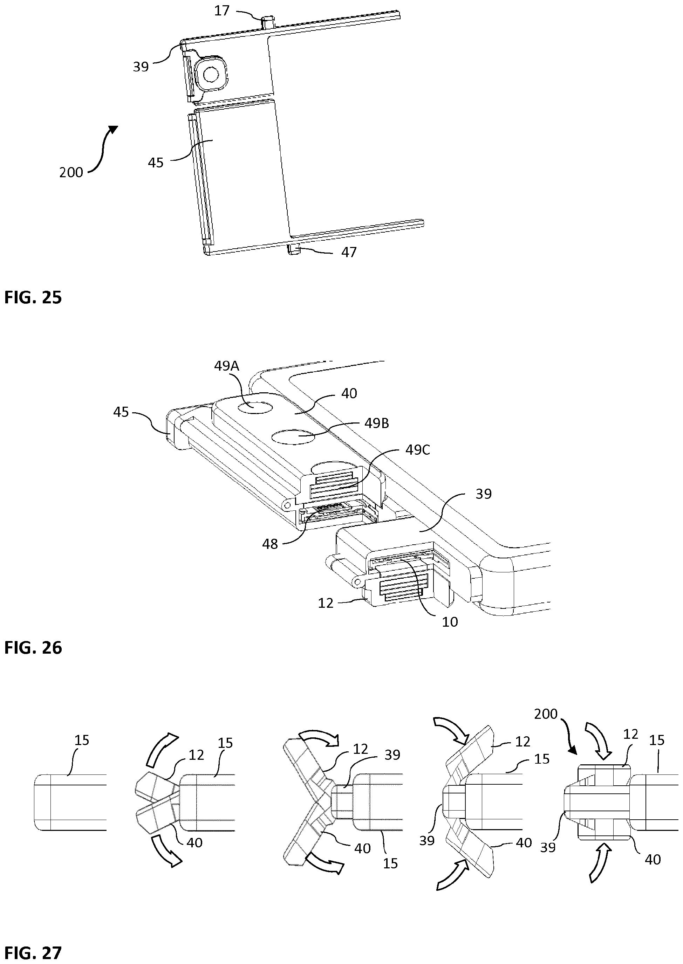

FIGS. 24 and 25 illustrate schematic representations of a camera system 200 for a portable electrical device 15 comprising more than one carriage 39, 45. The camera system 200 may be like the camera system 200 of FIGS. 22 and 23 illustrated from a front screen 41 side of the device 15, with a difference in that the first and the second operable camera modules are formed in separate carriages 39, 45.

In addition to a first carriage 39, the camera system 200 may comprise a second carriage 45 for providing a platform for a second operable camera module. The first and the second carriage 39, 45 may be movably coupled to a portable electrical device 15 such that the carriages 39, 45 may be moved simultaneously or separately. In FIG. 24, the camera system may be coupled to a portable electrical device 15, and the carriages 39, 45 may be moved outward from the device 15 with moving means, such as a user operable lever 17, to initiate automated transition from a storage position to an operating position. In FIG. 25, the camera system 200 comprises separate moving means 17, 45 for the first carriage 39 and the at least one second carriage 45. For example, if a user needs only the second camera module facing a rear side direction of the device 15, only the second carriage 45 may be moved outward from the device for folding at least one second optomechanical unit on top of at least one second image sensor to form the at least one second operable camera module.

In an implementation, the camera system 200 may comprise a dual hinge-system to allow the first and the at least one second operable camera modules being folded into different directions with respect to the portable electrical device 15 such that optical axes of the first and the at least one second operable camera modules face different directions.

FIG. 26 illustrates a schematic representation of a cross-section view of a camera system 200 for a portable electrical device comprising more than one carriage 39, 45 in an operating position. In an implementation, the camera system 200 may comprise a second carriage 45 in parallel to a first carriage 39. At least one second image sensor 48 may be mounted in the second carriage 45, and at least one second optomechanical unit 40 may be pivotably coupled to the second carriage 45. The at least one second optomechanical unit 40 may comprise one or more optical lens groups 49A, 49B, 49C in parallel, which may be positioned on top of one or more second image sensors 48 when the at least one second optomechanical unit 40 is folded to the operating position. The at least one second optomechanical unit or sensor 40, 48 may further comprise an electromechanical positioning arrangement or a fine adjustment arrangement to improve positioning errors between the at least one second optomechanical unit 40 and the at least one second image sensor 48 in the operating position. The first carriage 39 with a first image sensor 10 and pivotably coupled first optomechanical unit 12 may be arranged such that the first and the at least one second optomechanical units 12, 40 may be folded on opposite directions.

FIG. 27 illustrates a schematic representation of a transition from a storage position to an operational position of a camera system 200 for a portable electrical device 15 comprising more than one camera module. The camera system 200 may comprise one or two carriages 39. The optomechanical units 12, 40 may fold on top of the respective image sensors in different directions. The automatic folding mechanism of the first 12 and the at least one second optomechanical unit 40 is illustrated in FIG. 24 in steps when the carriage(s) 39 are moving outward from the portable electrical device 15. The folding directions of the units 12, 40 are illustrated with arrows.

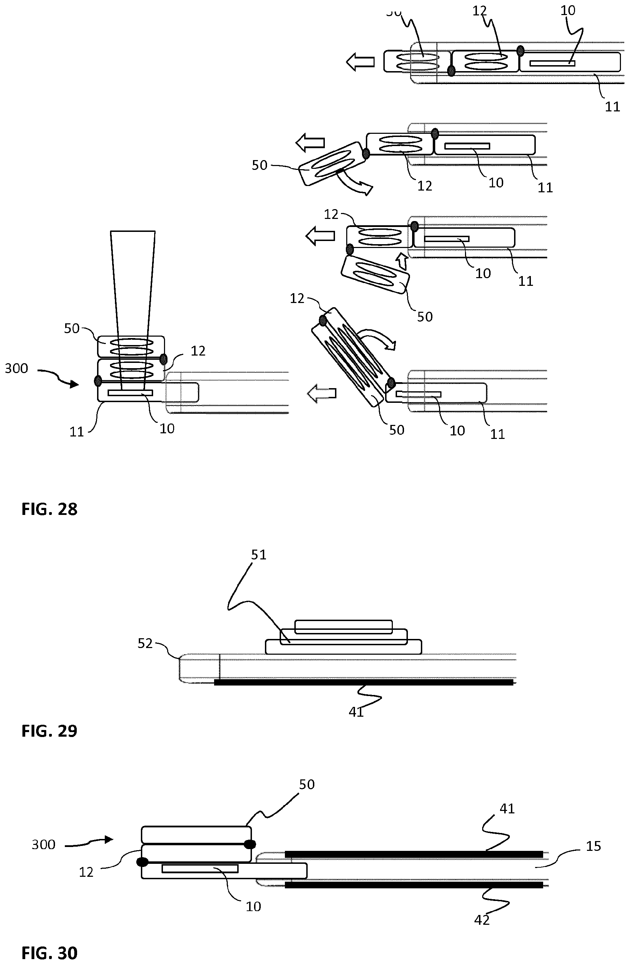

FIG. 28 illustrates a schematic representation of a transition from a storage position to an operational position of a camera system 300 comprising more than one optomechanical units 12, 50.

In Fig. 28, the camera system 300 comprises a first optomechanical unit 12, a second optomechanical unit 50 and a first image sensor 10 mounted in a first carriage 11. The first optomechanical unit 12 is pivotably coupled to the first carriage 11. Further, the second optomechanical unit 50 is pivotably coupled to the first optomechanical unit 12. The folding directions of the first and the second optomechanical units 12, 50 may be opposite to each other, as illustrated in FIG. 28 with curved arrows and black circles (points of the pivoted couplings). The optomechanical units 12, 50 may be automatically folded on top of the first image sensor 10 in response to the first carriage 11 moving outward from a portable electrical device 15 as illustrated with a straight arrow. In an example, the camera system 300 may comprise more than one second optomechanical units 50 pivotably coupled to each other. Each of the first and the at least one second optomechanical unit 12, 50 may have an opposite folding direction in relation to the adjacent first or the second optomechanical unit 12, 50. Thus, the camera system 300 may comprise a multi-hinge system with several stack-up layers 10, 12, 50 to generate a tall camera.

FIG. 29 illustrates a schematic representation of a side view of an exemplary stacking arrangement of camera elements 51 in a traditional camera system. The traditional camera system may comprise threaded optical ring elements 51. The ring elements 51 typically need to have a certain overlapping of 20-30 % to each other due to rigidity. This reduces stacking efficiency of camera elements 51. The traditional camera system may be coupled to a device 52 having a single screen 41, wherein the screen 41 is located on the opposite side than the camera system due to the required space of the camera system.

FIG. 30 illustrates a schematic representation of a side view of a stacking arrangement of camera elements 10, 12, 50 in a protruding and foldable camera system 300. The camera system 300 illustrated in FIG. 30 may be like the camera system 300 illustrated in FIG. 28. The foldable multi-layer camera arrangement may enable 100% stacking efficiency of the optical elements 12, 50 as the elements may be folded on top of each other without any overlapping required. Further, the camera system 300 may be coupled to a portable electrical device 15 having a first full screen 41 and a second full screen 42 as the camera system 300 does not require any space on front or rear side of the device 15.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one example or may relate to several examples. The examples are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method, blocks or elements identified, but that such blocks or elements do not comprise an exclusive list and a method or apparatus may contain additional blocks or elements.

Although the solution and its advantages have been described in detail with reference to specific features and embodiments thereof, it is evident that various changes, modifications, substitutions, combinations and alterations can be made thereto without departing from the scope as defined by the appended claims. The specification and drawings are, accordingly, to be regarded simply as an illustration as defined by the appended claims, and are contemplated to cover any and all modifications, variations, combinations that fall within the scope of the present subject-matter.

## Claims

1. A camera system (100, 200, 300) for a portable electrical device (15),
comprising:
a first image sensor (10) facing in a first direction;
a first optomechanical unit (12), wherein the first optomechanical unit (12) comprises a top side and a bottom side opposite to each other; and
a first carriage (11, 39) for movably coupling the camera system (100, 200, 300) to the portable electrical device (15);
wherein the first image sensor (10) is mounted in the first carriage (11, 39);
the first optomechanical unit (12) is coupled to the first carriage (11, 39) and is configured to pivotably rotate around a hinge (23) in the first carriage (11, 39);
by rotating the first optomechanical unit (12) around the hinge (23), the camera system (100, 200, 300) is adjustable between a storage position and an operating position;
in the storage position, the first image sensor (10) and the first optomechanical unit (12) are side-by-side in a planar position, and the bottom side of the first optomechanical unit (12) is facing in the first direction;
in the operating position, the first optomechanical unit (12) is folded on top of the first image sensor (10) to form a first operable camera module, and the bottom side of the first optomechanical unit (12) is facing the first image sensor.

2. The camera system (100, 200, 300) of claim 1, comprising automatically operating mechanical means (13, 23, 25), which is used to fold the first optomechanical unit (12) on top of the first image sensor (10) in response to the camera system (100, 200, 300) moving outward from the portable electrical device (15), so that the camera system (100, 200, 300) is adjusted to the operating position.

3. The camera system (100, 200, 300) of claim 2, wherein the automatically operating mechanical means comprise the hinge (23) and a spring element (13, 25).

4. The camera system (100, 200, 300) of any of the preceding claims, wherein the first carriage (11, 39) comprises a positioning guiding recess (33) configured for guiding the first optomechanical unit (12) to a correct position with matching optical axis configuration between the first optomechanical unit (12) and the first image sensor (10) when folding to the operating position.

5. The camera system (100, 200, 300) of any of the preceding claims, wherein the first carriage (11, 39) comprises a dual hinge-system (38) to allow the first operable camera module being folded into different directions with respect to the portable electrical device (15).

6. The camera system (100, 200, 300) of any of the preceding claims, wherein the bottom side is facing the first image sensor (10) when the first optomechanical unit is folded on top of the first image sensor and is comprising a sliding surface (30, 31) surrounding a recessed optical surface (32) for providing sliding contact area when the first optomechanical unit is folded on top of the first image sensor.

7. The camera system (100, 200, 300) of any of the preceding claims, wherein at least one of the first image sensor (10) or the first optomechanical unit (12) comprises at least one of an electromechanical positioning arrangement (27) or a fine adjustment arrangement (28, 29) to improve positioning errors between the first optomechanical unit (12) and the first image sensor (10) in the operating position.

8. The camera system (100, 200, 300) of any of the preceding claims, further comprising:
at least one second optomechanical unit (50);
wherein the at least one second optomechanical unit (50) and the first optomechanical (12) unit are pivotably coupled to each other, and the at least one second optomechanical unit (50) is being folded on top of the first optomechanical unit (12) to form the first operable camera module, each of the first and the at least one second optomechanical unit (12, 50) having an opposite folding direction in relation to the adjacent first or the second optomechanical unit (12, 50).

9. The camera system (100, 200, 300) of any of the claims 1-7, further comprising:
at least one second image sensor (48); and
at least one second optomechanical unit (40);
wherein the at least one second image sensor (48) is mounted in the first carriage (11, 39) on the opposite side adjacent to the first image sensor (10); the at least one second optomechanical unit (40) is pivotably coupled to the first carriage (11, 39) adjacent to the first optomechanical unit (12) to allow adjustment of the camera system (100, 200, 300) to the storage position and the operating position; in the storage position, the at least one second image sensor (48) and the at least one second optomechanical unit (40) are side-by-side in a planar position; in the operating position, the at least one second optomechanical (40) unit is folded on top of the at least one second image sensor (48) to form at least one second operable camera module.

10. The camera system (100, 200, 300) of any of the claims 1-7, comprising:
at least one second image sensor (48);
at least one second optomechanical unit (40); and
a second carriage (45) arranged in parallel to the first carriage (11, 39);
wherein the at least one second image sensor (48) is mounted in the second carriage (45) and the at least one second optomechanical unit (40) is pivotably coupled to the second carriage (45) to allow adjustment of the camera system (100, 200, 300) to the storage position and the operating position; in the storage position, the at least one second image sensor (48) and the at least one second optomechanical unit (40) are side-by-side in a planar position; in the operating position, the at least one second optomechanical unit (40) is folded on top of the at least one second image sensor (48) to form at least one second operable camera module, the at least one second operable camera module facing different direction than the first operable camera module.

11. The camera system (100, 200, 300) of claim 9 or 10, comprising at least one dual hinge-system (38) to allow the first and the at least one second operable camera modules being folded into different directions with respect to the portable electrical device such that optical axes (43, 44) of the first and the at least one second operable camera module face different directions.

12. The camera system (100, 200, 300) of claim 5 or 11, wherein the dual-hinge system (38) comprises a spring element (13, 25).

13. A portable electronic device (15) comprising the camera system (100, 200, 300) of any of the claims 1 - 12.

14. The portable electronic device (15) of claim 13, wherein the portable electronic device (15) is a full-screen device.

15. A method, which is applied to a camera system (100, 200, 300) for a portable electrical device (15), the camera system (100, 200, 300) comprises a first image sensor (10) facing in a first direction, a first optomechanical unit (12) comprising a top side and a bottom side opposite to each other, and a first carriage (11, 39) for movably coupling the camera system (100, 200, 300) to the portable electrical device (15); the method comprises:
moving the first carriage (11, 39) outward from the portable electrical device (15);
folding the first optomechanical unit (12), pivotally rotating around a hinge (23) in the first carriage (11, 39) between a storage position and an operating position;
in the storage position, the first image sensor (10) and the first optomechanical unit (12) are side-by-side in a planar position, and the bottom side of the first optomechanical unit (12) is facing in the first direction;
in the operating position, the first optomechanical unit (12) is folded on top of the first image sensor (10) to form a first operable camera module, and the bottom side of the first optomechanical unit (12) is facing the first image sensor.

## Patentansprüche

1. Kamerasystem (100, 200, 300) für eine tragbare elektronische Vorrichtung (15), umfassend:
einen ersten Bildsensor (10), der in eine erste Richtung gewandt ist;
eine erste optomechanische Einheit (12), wobei die erste optomechanische Einheit (12) eine Oberseite und eine Unterseite, die einander gegenüberliegen, umfasst; und
einen ersten Schlitten (11, 39) zum beweglichen Koppeln des Kamerasystems (100, 200, 300) mit der tragbaren elektronischen Vorrichtung (15);
wobei der erste Bildsensor (10) in den ersten Schlitten (11, 39) eingebaut ist;
die erste optomechanische Einheit (12) mit dem ersten Schlitten (11, 39) gekoppelt ist und so ausgeführt ist, dass sie sich schwenkbar um ein Scharnier (23) in dem ersten Schlitten (11, 39) dreht;
das Kamerasystem (100, 200, 300) durch Drehen der ersten optomechanischen Einheit (12) um das Scharnier (23) zwischen einer Verstauposition und einer Betriebsposition verstellbar ist;
in der Verstauposition sich der erste Bildsensor (10) und die erste optomechanische Einheit (12) in einer planaren Lage nebeneinander befinden und die Unterseite der ersten optomechanischen Einheit (12) in die erste Richtung gewandt ist;
in der Betriebsposition die erste optomechanische Einheit (12) auf den ersten Bildsensor (10) geklappt ist, sodass ein erstes betriebsfähiges Kameramodul gebildet wird, und die Unterseite der ersten optomechanischen Einheit (12) dem ersten Bildsensor zugewandt ist.

2. Kamerasystem (100, 200, 300) nach Anspruch 1, umfassend automatisch arbeitende mechanische Mittel (13, 23, 25), die dazu dienen, als Reaktion darauf, dass sich das Kamerasystem (100, 200, 300) aus der tragbaren elektronischen Vorrichtung (15) herausbewegt, die erste optomechanische Einheit (12) auf den ersten Bildsensor (10) zu klappen, sodass das Kamerasystem (100, 200, 300) in die Betriebsposition verstellt wird.

3. Kamerasystem (100, 200, 300) nach Anspruch 2, wobei die automatisch arbeitenden mechanischen Mittel das Scharnier (23) und ein Federelement (13, 25) umfassen.

4. Kamerasystem (100, 200, 300) nach einem der vorhergehenden Ansprüche, wobei der erste Schlitten (11, 39) eine Positionierungsführungsaussparung (33) umfasst, die dazu ausgelegt ist, die erste optomechanische Einheit (12) beim Klappen in die Betriebsposition in eine korrekte Position mit einer zwischen der ersten optomechanischen Einheit (12) und dem ersten Bildsensor (10) übereinstimmenden Konfiguration der optischen Achse zu führen.

5. Kamerasystem (100, 200, 300) nach einem der vorhergehenden Ansprüche, wobei der erste Schlitten (11, 39) ein Doppelscharniersystem (38) umfasst, sodass das erste betriebsfähige Kameramodul bezüglich der tragbaren elektronischen Vorrichtung (15) in verschiedene Richtungen geklappt werden kann.

6. Kamerasystem (100, 200, 300) nach einem der vorhergehenden Ansprüche, wobei, wenn die erste optomechanische Einheit auf die Oberseite des ersten Bildsensors geklappt ist, die Unterseite dem ersten Bildsensor (10) zugewandt ist und eine eine vertiefte optische Fläche (32) umgebende Gleitfläche (30, 31) umfasst, um, wenn die erste optomechanische Einheit auf die Oberseite des ersten Bildsensors geklappt wird, eine Gleitkontaktfläche bereitzustellen.

7. Kamerasystem (100, 200, 300) nach einem der vorhergehenden Ansprüche, wobei mindestens eines von dem ersten Bildsensor (10) oder der ersten optomechanischen Einheit (12) mindestens eines von einer elektromechanischen Positionierungsanordnung (27) oder einer Feineinstellungsanordnung (28, 29) zur Verbesserung von Positionierungsfehlern zwischen der ersten optomechanischen Einheit (12) und dem ersten Bildsensor (10) in der Betriebsposition umfasst.

8. Kamerasystem (100, 200, 300) nach einem der vorhergehenden Ansprüche, ferner umfassend:
mindestens eine zweite optomechanische Einheit (50);
wobei die mindestens eine zweite optomechanische Einheit (50) und die erste optomechanische Einheit (12) schwenkbar miteinander gekoppelt sind und die mindestens eine zweite optomechanische Einheit (50) auf die erste optomechanische Einheit (12) geklappt wird, sodass das erste betriebsfähige Kameramodul gebildet wird, wobei jede Einheit von der ersten und der mindestens einen zweiten optomechanischen Einheit (12, 50) bezüglich der benachbarten ersten oder zweiten optomechanischen Einheit (12, 50) eine entgegengesetzte Klapprichtung aufweist.

9. Kamerasystem (100, 200, 300) nach einem der Ansprüche 1-7, ferner umfassend:
mindestens einen zweiten Bildsensor (48); und
mindestens eine zweite optomechanische Einheit (40);
wobei der mindestens eine zweite Bildsensor (48) auf der gegenüberliegenden Seite benachbart zu dem ersten Bildsensor (10) in den ersten Schlitten (11, 39) eingebaut ist; die mindestens eine zweite optomechanische Einheit (40) benachbart zu der ersten optomechanischen Einheit (12) schwenkbar mit dem ersten Schlitten (11, 39) gekoppelt ist, sodass eine Verstellung des Kamerasystems (100, 200, 300) in die Verstauposition und die Betriebsposition erfolgen kann; in der Verstauposition der mindestens eine zweite Bildsensor (48) und die mindestens eine zweite optomechanische Einheit (40) in einer planaren Lage nebeneinander liegen; in der Betriebsposition die mindestens eine zweite optomechanische Einheit (40) auf den mindestens einen zweiten Bildsensor (48) geklappt ist, sodass mindestens ein zweites betriebsfähiges Kameramodul gebildet wird.

10. Kamerasystem (100, 200, 300) nach einem der Ansprüche 1-7, umfassend:
mindestens einen zweiten Bildsensor (48);
mindestens eine zweite optomechanische Einheit (40); und
einen zweiten Schlitten (45), der parallel zu dem ersten Schlitten (11, 39) angeordnet ist;
wobei der mindestens eine zweite Bildsensor (48) in den zweiten Schlitten (45) eingebaut ist und die mindestens eine zweite optomechanische Einheit (40) schwenkbar mit dem zweiten Schlitten (45) gekoppelt ist, sodass eine Verstellung des Kamerasystems (100, 200, 300) in die Verstauposition und die Betriebsposition erfolgen kann; in der Verstauposition der mindestens eine zweite Bildsensor (48) und die mindestens eine zweite optomechanische Einheit (40) in einer planaren Lage nebeneinander liegen; in der Betriebsposition die mindestens eine zweite optomechanische Einheit (40) auf den mindestens einen zweiten Bildsensor (48) geklappt ist, sodass mindestens ein zweites betriebsfähiges Kameramodul gebildet wird, wobei das mindestens zweite betriebsfähige Kameramodul in eine andere Richtung gewandt ist als das erste betriebsfähige Kameramodul.

11. Kamerasystem (100, 200, 300) nach Anspruch 9 oder 10, mindestens ein Doppelscharniersystem (38) umfassend, sodass das erste und das mindestens eine zweite betriebsfähige Kameramodul bezüglich der tragbarer elektronischen Vorrichtung derart in unterschiedliche Richtungen geklappt werden können, dass die optischen Achsen (43, 44) des ersten und des mindestens einen zweiten betreibbaren Kameramoduls in unterschiedliche Richtungen gewandt sind.

12. Kamerasystem (100, 200, 300) nach Anspruch 5 oder 11, wobei das Doppelscharniersystem (38) ein Federelement (13, 25) umfasst.

13. Tragbare elektronische Vorrichtung (15), umfassend das Kamerasystem (100, 200, 300) nach einem der Ansprüche 1-12.

14. Tragbare elektronische Vorrichtung (15) nach Anspruch 13, wobei die tragbare elektronische Vorrichtung (15) eine Vollbildschirmvorrichtung ist.

15. Verfahren, das bei einem Kamerasystem (100, 200, 300) für eine tragbare elektronische Vorrichtung (15) angewendet wird, wobei das Kamerasystem (100, 200, 300) einen ersten Bildsensor (10), der in eine erste Richtung gewandt ist, eine erste optomechanische Einheit (12), die eine Oberseite und eine Unterseite, die einander gegenüberliegen, umfasst, und einen ersten Schlitten (11, 39) zum beweglichen Koppeln des Kamerasystems (100, 200, 300) mit der tragbaren elektronischen Vorrichtung (15) umfasst; das das Verfahren umfassend:
Bewegen des ersten Schlittens (11, 39) aus der tragbaren elektronischen Vorrichtung (15) heraus;
Klappen der ersten optomechanischen Einheit (12), schwenkbares Drehen um ein Scharnier (23) in dem ersten Schlitten (11, 39) zwischen einer Verstauposition und einer Betriebsposition;
in der Verstauposition sich der erste Bildsensor (10) und die erste optomechanische Einheit (12) in einer planaren Lage nebeneinander befinden und die Unterseite der ersten optomechanischen Einheit (12) in die erste Richtung gewandt ist;
in der Betriebsposition die erste optomechanische Einheit (12) auf den ersten Bildsensor (10) geklappt ist, sodass ein erstes betriebsfähiges Kameramodul gebildet wird, und die Unterseite der ersten optomechanischen Einheit (12) dem ersten Bildsensor zugewandt ist.

## Revendications

1. Système de caméra (100, 200, 300) pour un dispositif électrique portable (15), comprenant :
un premier capteur d'image (10) orienté dans une première direction ;
une première unité optomécanique (12), dans lequel la première unité optomécanique (12) comprend un côté supérieur et un côté inférieur opposés l'un à l'autre ; et
un premier chariot (11, 39) pour coupler de manière mobile le système de caméra (100, 200, 300) au dispositif électrique portable (15) ;
dans lequel le premier capteur d'image (10) est monté dans le premier chariot (11, 39) ;
la première unité optomécanique (12) est couplée au premier chariot (11, 39) et est configurée pour tourner de manière pivotante autour d'une charnière (23) dans le premier chariot (11, 39) ;
en faisant tourner la première unité optomécanique (12) autour de la charnière (23), le système de caméra (100, 200, 300) est réglable entre une position de stockage et une position de fonctionnement ;
en position de stockage, le premier capteur d'image (10) et la première unité optomécanique (12) sont côte à côte dans une position plane, et le côté inférieur de la première unité optomécanique (12) est orienté dans la première direction ;
en position de fonctionnement, la première unité optomécanique (12) est pliée au-dessus du premier capteur d'image (10) pour former un premier module de caméra fonctionnel, et le côté inférieur de la première unité optomécanique (12) fait face au premier capteur d'image.

2. Système de caméra (100, 200, 300) selon la revendication 1, comprenant un moyen mécanique à fonctionnement automatique (13, 23, 25), qui est utilisé pour replier la première unité optomécanique (12) au-dessus du premier capteur d'image (10) en réponse au déplacement du système de caméra (100, 200, 300) vers l'extérieur du dispositif électrique portable (15), de telle sorte que le système de caméra (100, 200, 300) est ajusté à la position de fonctionnement.

3. Système de caméra (100, 200, 300) selon la revendication 2, dans lequel le moyens mécanique à fonctionnement automatique comprend la charnière (23) et un élément à ressort (13, 25).

4. Système de caméra (100, 200, 300) selon l'une quelconque des revendications précédentes, dans lequel le premier chariot (11, 39) comprend un évidement de guidage de positionnement (33) configuré pour guider la première unité optomécanique (12) vers une position correcte avec une configuration d'axe optique adaptée entre la première unité optomécanique (12) et le premier capteur d'image (10) lors du pliage vers la position de fonctionnement.

5. Système de caméra (100, 200, 300) selon l'une quelconque des revendications précédentes, dans lequel le premier chariot (11, 39) comprend un système de charnière double (38) pour permettre au premier module de caméra fonctionnel d'être plié dans différentes directions par rapport à au dispositif électrique portable (15).

6. Système de caméra (100, 200, 300) selon l'une quelconque des revendications précédentes, dans lequel le côté inférieur fait face au premier capteur d'image (10) lorsque la première unité optomécanique est repliée au-dessus du premier capteur d'image et comprend une surface coulissante (30, 31) entourant une surface optique évidée (32) pour fournir une zone de contact coulissant lorsque la première unité optomécanique est repliée au-dessus du premier capteur d'image.

7. Système de caméra (100, 200, 300) selon l'une quelconque des revendications précédentes, dans lequel au moins l'un parmi le premier capteur d'image (10) ou la première unité optomécanique (12) comprend au moins l'un parmi un agencement de positionnement électromécanique (27) ou un agencement de réglage fin (28, 29) pour améliorer les erreurs de positionnement entre la première unité optomécanique (12) et le premier capteur d'image (10) dans la position de fonctionnement.

8. Système de caméra (100, 200, 300) selon l'une quelconque des revendications précédentes, comprenant en outre :
au moins une seconde unité optomécanique (50) ;
dans lequel l'au moins une seconde unité optomécanique (50) et la première unité optomécanique (12) sont couplées de manière pivotante l'une à l'autre, et l'au moins une seconde unité optomécanique (50) est repliée au-dessus de la première unité optomécanique (12) pour former le premier module de caméra fonctionnel, chacune de la première et de l'au moins une seconde unités optomécaniques (12, 50) ayant une direction de pliage opposée par rapport à la première ou à la seconde unité optomécanique (12, 50) adjacente.

9. Système de caméra (100, 200, 300) selon l'une quelconque des revendications 1 à 7, comprenant en outre :
au moins un second capteur d'image (48) ; et
au moins une seconde unité optomécanique (40) ;
dans lequel l'au moins un second capteur d'image (48) est monté dans le premier chariot (11, 39) sur le côté opposé adjacent au premier capteur d'image (10) ; l'au moins une seconde unité optomécanique (40) est couplée de manière pivotante au premier chariot (11, 39) adjacent à la première unité optomécanique (12) pour permettre le réglage du système de caméra (100, 200, 300) en position de stockage et en position de fonctionnement ; en position de stockage, l'au moins un second capteur d'image (48) et l'au moins une seconde unité optomécanique (40) sont côte à côte dans une position plane ; dans la position de fonctionnement, l'au moins une seconde unité optomécanique (40) est pliée au-dessus de l'au moins un second capteur d'image (48) pour former au moins un second module de caméra fonctionnel.

10. Système de caméra (100, 200, 300) selon l'une quelconque des revendications 1 à 7, comprenant :
au moins un second capteur d'image (48) ;
au moins une seconde unité optomécanique (40) ; et
un second chariot (45) disposé parallèlement au premier chariot (11, 39) ;
dans lequel l'au moins un second capteur d'image (48) est monté dans le second chariot (45) et au moins une seconde unité optomécanique (40) est couplée de manière pivotante au second chariot (45) pour permettre le réglage du système de caméra (100, 200, 300) en position de stockage et en position de fonctionnement ; en position de stockage, l'au moins un second capteur d'image (48) et l'au moins une seconde unité optomécanique (40) sont côte à côte dans une position planaire ;
en position de fonctionnement, l'au moins une seconde unité optomécanique (40) est pliée au-dessus de l'au moins un second capteur d'image (48) pour former au moins un second module de caméra fonctionnel, l'au moins un second module de caméra second étant orienté dans une direction différente de celle du premier module de caméra fonctionnel.

11. Système de caméra (100, 200, 300) selon la revendication 9 ou 10, comprenant au moins un système de charnière double (38) pour permettre au premier et à l'au moins un second modules de caméra fonctionnel d'être pliés dans des directions différentes par rapport au dispositif électrique portable de sorte que les axes optiques (43, 44) du premier et de l'au moins un second module de caméra fonctionnel sont orientés dans des directions différentes.

12. Système de caméra (100, 200, 300) selon la revendication 5 ou 11, dans lequel le système à double charnière (38) comprend un élément à ressort (13, 25).

13. Dispositif électronique portable (15) comprenant le système de caméra (100, 200, 300) selon l'une quelconque des revendications 1 à 12.

14. Dispositif électronique portable (15) selon la revendication 13, dans lequel le dispositif électronique portable (15) est un dispositif plein écran.

15. Procédé appliqué à un système de caméra (100, 200, 300) pour un dispositif électrique portable (15), le système de caméra (100, 200, 300) comprend un premier capteur d'image (10) orienté dans une première direction, une première unité optomécanique (12) comprenant un côté supérieur et un côté inférieur opposés l'un à l'autre, et un premier chariot (11, 39) pour coupler de manière mobile le système de caméra (100, 200, 300) au dispositif électrique portable (15) ; le procédé comprend :
le déplacement du premier chariot (11, 39) vers l'extérieur du dispositif électrique portable (15) ;
le pliage de la première unité optomécanique (12), la rotation de manière pivotante autour d'une charnière (23) dans le premier chariot (11, 39) entre une position de stockage et une position de fonctionnement ;
en position de stockage, le premier capteur d'image (10) et la première unité optomécanique (12) sont côte à côte dans une position plane, et le côté inférieur de la première unité optomécanique (12) est orienté dans la première direction ;
en position de fonctionnement, la première unité optomécanique (12) est pliée au-dessus du premier capteur d'image (10) pour former un premier module de caméra fonctionnel, et le côté inférieur de la première unité optomécanique (12) fait face au premier capteur d'image.
